# EUROPEAN PATENT APPLICATION

(11) **EP 4 223 859 A1**
(43) Date of publication of application: **09.08.2023**
(21) Application number: 21875474.5
(22) Date of filing: 27.09.2021
(51) Int. Cl.: C10N 30/00, C10N 40/02, C10N 50/10, F16C 19/02, F16C 33/41, F16C 33/44, F16C 33/56, F16C 33/66, F16C 33/78, C10M 107/02, F16J 15/16, F16J 15/3284

(54) **ROLLING BEARING**

(30) Priority: 29.09.2020 JP 2020162822; 29.06.2021 JP 2021107216
(71) Applicant: NSK Ltd., Tokyo 141-8560 (JP)
(72) Inventor: YABE Toshikazu, Fujisawa-shi, Kanagawa 251-8501 (JP); MATSUMOTO Tomoaki, Fujisawa-shi, Kanagawa 251-88501 (JP); ITO Azuma, Fujisawa-shi, Kanagawa 251-8501 (JP); YOKOYAMA Keisuke, Fujisawa-shi, Kanagawa 251-8501 (JP); AIHARA Nariaki, Fujisawa-shi, Kanagawa 251-8501 (JP); HONDA Shintaro, Fujisawa-shi, Kanagawa 251-8501 (JP)
(74) Representative: Grünecker Patent- und Rechtsanwälte PartG mbB
(86) International application number: PCT/JP2021/035238
(87) International publication number: WO 2022/071172

(57) **Abstract**

Provided is a rolling bearing using a retainer, particularly a highly reliable retainer in which dimensional stability required for a retainer of an outer ring guide type, ductility required for a crown-type retainer, improvement in adhesion of grease with a poly-α-olefin oil or the like as a base oil, and deformation prevention at a high speed can be achieved. The rolling bearing includes at least an inner ring 1, an outer ring 3, a synthetic resin retainer 9, and a rolling element 7, in which the synthetic resin retainer 9 is formed of a polyamide resin composition including polyamide 410 and a reinforcing fiber material with a content of 0% by weight to 40% by weight.

## Description

### TECHNICAL FIELD

The present invention relates to improvement in a rolling bearing, particularly a synthetic resin retainer incorporated in the rolling bearing.

### BACKGROUND ART

In the related art, the synthetic resin retainer that forms the rolling bearing is most often made of the nylon 66 resin reinforced with the glass fiber (see, for example, Patent Literature 1).

The rolling bearing comes in various types, is used in various environments, and requires different performances. In addition, the synthetic resin retainer, which is a component, is also used by combining various resin materials and reinforcing materials.

For example, as the resin material, in addition to a polyamide 66 (PA66) resin, a polyamide 46 (PA46) resin, a polyphenylene sulfide resin, a polyetheretherketone resin, and the like are used, and the glass fiber, a carbon fiber, and the like are used as the reinforcing material.

Among the rolling bearings, those used in the machine tool spindle are outer ring guide types, in which an outer peripheral surface of a retainer and an inner peripheral surface of an outer ring come into contact with each other during high-speed rotation. Thus, the retainer itself is required to have a small dimensional change due to water absorption. In addition, the polyphenylene sulfide resin and the polyetheretherketone resin, which have low water absorption, are generally used as the base resin for the retainer. In addition, as a retainer for a machine tool bearing, a machined phenolic resin ring reinforced with cotton cloth, which also has a small dimensional change due to water absorption, is used. In addition, grease lubrication, oil-air lubrication, jet lubrication, and the like are appropriately selected and adopted as a lubrication method for these machine tool spindle bearings according to usage conditions and costs. Generally, grease lubrication is often used due to the low cost and easy maintenance.

In addition, in the crown-type retainer, which is most commonly used in the ball bearing, PA66 and PA46 are usually used because cracks occur when the resin material does not have ductility when the ball is press-fitted (see, for example, Patent Literature 2).

### CITATION LIST

### PATENT LITERATURE

Patent Literature 1: JP2002-122148A
Patent Literature 2: JP2007-56930A

### SUMMARY OF INVENTION

### TECHNICAL PROBLEM

However, a retainer based on the above-described PA66 resin and PA46 resin may cause dimensional change due to ingress and egress of moisture, and in the worst case, may interfere with inner/outer rings and rolling elements of a rolling bearing and cause adverse effects. In particular, in a retainer of the outer ring guide type described above, dimensional change is regarded as important, so a polyphenylene sulfide resin and a polyetheretherketone resin, which have high material costs, are generally used.

In the crown-type retainer, which is most commonly used in the ball bearing, in the case where the polyphenylene sulfide resin or a semi-aromatic polyamide resin (modified polyamide 6T, or the like) with low ductility is used as a base resin (+ reinforcing fiber material), if a resin material does not have ductility, cracks or chips will occur when a ball is press-fitted into the claw part that holds the ball. As described above, the actual situation is that the resin composition containing a glass fiber in PA66 and PA46 is actually used.

A mineral oil and a poly-α-olefin oil with low polarity, which are mainly composed of an aliphatic hydrocarbon, are most commonly used as grease that fills an internal space of the rolling bearing. However, the PA66 resin and the PA46 resin, which have many amide bonds in the molecular structure, and the polyphenylene sulfide resin and the polyetheretherketone resin, which have many aromatic rings in the molecular structure, have greatly different molecular structures. Thus, wettability is poor, and adhesion of the grease to the retainer is not sufficient. The semi-aromatic polyamide resin, such as modified polyamide 6T, is similar because the semi-aromatic polyamide resin has a large number of amide bonds and aromatic rings in the molecular structure.

In addition, polyamide 11 (melting point 187°C) and polyamide 12 (melting point 176°C) are examples of aliphatic polyamide-based materials with low water absorption and few amide bonds in the molecular structure. However, since the melting point is low, when a bearing temperature rises due to high-speed rotation, there is a risk of softening and deformation of the retainer.

The present invention is made to solve such problems of the related art, and an object is to provide a rolling bearing using a retainer, particularly a highly reliable retainer in which dimensional stability required for the retainer of the outer ring guide type, ductility required for the crown-type retainer, improvement in adhesion of the grease with the poly-α-olefin oil or the like as a base oil, and deformation prevention at a high speed are achieved.

### SOLUTION TO PROBLEM

To achieve the object, a first invention is a rolling bearing that includes at least an inner ring, an outer ring, a synthetic resin retainer, and a rolling element, in which the synthetic resin retainer is formed of a polyamide resin composition including polyamide 410 (PA410) and a reinforcing material with a content of 0% by weight to 40% by weight.

According to a second invention, in the first invention, the reinforcing material is 10% by weight to 40% by weight.

According to a third invention, in the first invention or the second invention, the polyamide 410 has a bio content of 100%.

According to a fourth invention, in any one of the first invention to the third invention, the rolling bearing is an outer ring guide type.

According to a fifth invention, in any one of the first invention to the fourth invention, the retainer is a crown-type retainer having a claw portion.

According to a sixth invention, in any one of the first invention to the fifth invention, an internal space of the rolling bearing is filled with grease, and
a main component of a base oil of the grease is a poly-α-olefin oil.

According to a seventh invention, in any one of the first invention to the fifth invention, an internal space of the rolling bearing is filled with grease, and
the grease is biodegradable grease.

According to an eighth invention, in any one of the first invention to the seventh invention, a sealing seal is provided on an end surface of the rolling bearing, and
the sealing seal is formed of a polyamide resin composition including polyamide 410 and a reinforcing material with a content of 10% by weight to 40% by weight.

According to a ninth invention, in the eighth invention, the reinforcing material forming the polyamide resin composition has a content of 10% by weight to 40% by weight.

According to a tenth invention, in the eighth invention or the ninth invention, the polyamide 410 forming the sealing seal has a bio content of 100%.

### ADVANTAGEOUS EFFECTS OF INVENTION

According to the present invention, by using polyamide 410, which has a certain level of heat resistance and lower water absorption compared to polyamide 66, as a resin material of a retainer of a rolling bearing, it is possible to provide a rolling bearing that can be used in various environments and that achieves both high reliability and low cost. In addition, since polyamide 410 has a bio content of 100% and is carbon neutral, compared to polyamide 66 or the like of the related art, which uses only petroleum-derived components and has a bio content of 0%, it is possible to provide an environmentally friendly rolling bearing. Since polyamide 410 has a melting point close to that of polyamide 66, polyamide 410 can be sufficiently used as a substitute in applications where polyamide 66 is used.

Also, according to the present invention, as grease to be incorporated in the rolling bearing, by using grease composed of a base oil of which a main component is a poly-α-olefin oil, which has a similar molecular structure due to a C10 moiety (derived from sebacic acid) having a long-chain hydrocarbon moiety between amide groups, favorable wettability to the resin material can be maintained, and thus abrasion of the resin portion can be effectively prevented, thereby extending a lifespan of the rolling bearing.

Further, according to the present invention, biodegradable grease is used as the grease incorporated in the rolling bearing, so the rolling bearing can be made even more environmentally friendly. Also, when a polyamide resin composition using polyamide 410 is used to form a sealing seal incorporated in an end surface of the rolling bearing, the rolling bearing can be made even more environmentally friendly.

### BRIEF DESCRIPTION OF DRAWINGS

FIG. 1 is a schematic cross-sectional view illustrating a partially omitted first embodiment of the present invention.
FIG. 2 is a schematic perspective view of a synthetic resin retainer incorporated in the first embodiment.
FIG. 3 is a schematic cross-sectional view illustrating a partially omitted second embodiment of the present invention.
FIG. 4 is a schematic perspective view of a synthetic resin retainer incorporated in the second embodiment.
FIG. 5 is a schematic cross-sectional view illustrating a partially omitted third embodiment of the present invention.
FIG. 6 is a schematic perspective view of a synthetic resin retainer incorporated in the third embodiment.
FIG. 7 is a schematic cross-sectional view illustrating a partially omitted fourth embodiment of the present invention.

### DESCRIPTION OF EMBODIMENTS

An embodiment of the present invention will be described below. The present embodiment is merely an embodiment of the present invention and is not to be construed as being limited in any way, and the design can be appropriately changed within the scope of the present invention.

A rolling bearing of the present invention is configured by including an inner ring 1, an outer ring 3, a plurality of rolling elements 7 incorporated in an annular gap 5 formed between the inner ring 1 and the outer ring 3, and a synthetic resin retainer 9 that holds the plurality of rolling elements 7 at equal intervals. Further, in the present embodiment, an internal space of the rolling bearing is filled with grease in order to keep a lubricating state of the bearing in favorable condition, and a sealing seal 11 is incorporated in an end surface of the rolling bearing to seal the internal space of the bearing.

In the present embodiment, the synthetic resin retainer 9 and the sealing seal 11 are made of a polyamide resin composition including polyamide 410 and a reinforcing material with a content of 10% by weight to 40% by weight.

### <First Embodiment>

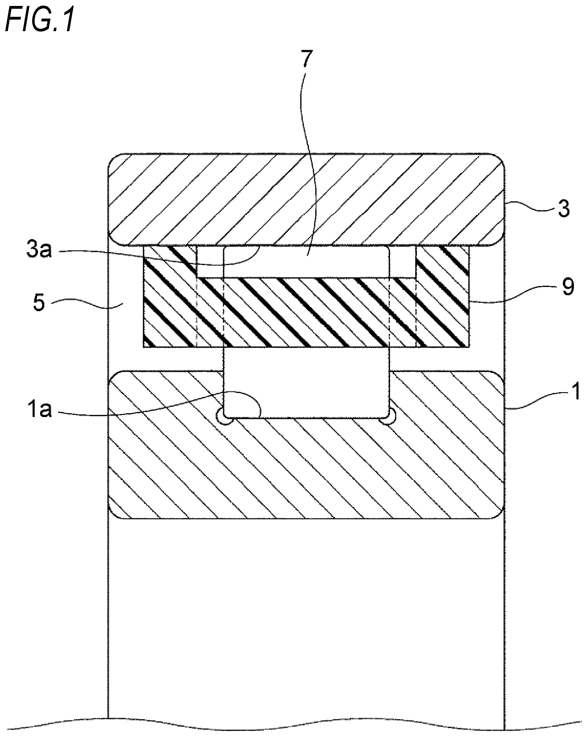

For example, a cylindrical roller bearing illustrated in FIG. 1 can be illustrated as an embodiment. The cylindrical roller bearing is configured by including an inner ring 1 having an inner ring raceway surface 1a on an outer peripheral surface of the inner ring 1, an outer ring 3 having an outer ring raceway surface 3a on an inner peripheral surface of the outer ring 3, a plurality of cylindrical rollers (rolling elements) 7 that are rollably incorporated between the inner ring raceway surface 1a and the outer ring raceway surface 3a, and a synthetic resin retainer 9 that holds the plurality of cylindrical rollers 7 at substantially equal intervals in a circumferential direction.

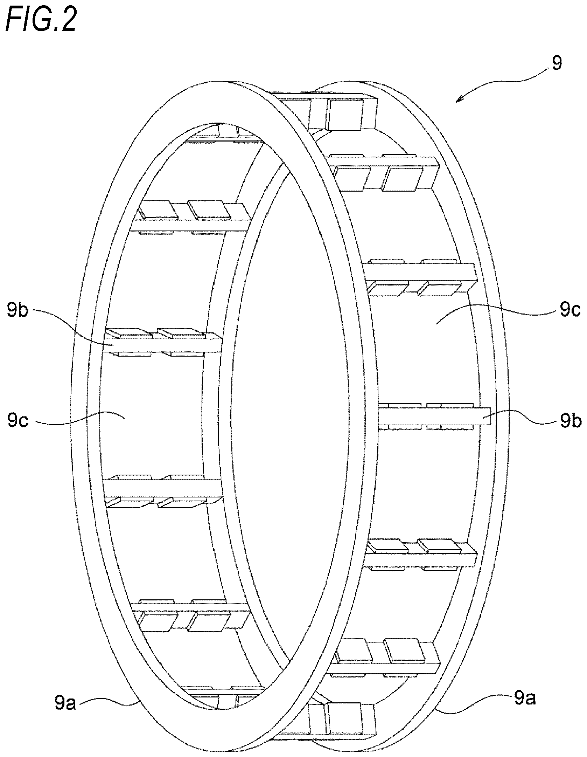

As illustrated in FIG. 2, the synthetic resin retainer 9 includes a pair of annular portions 9a and 9a arranged coaxially apart from each other in an axial direction, a plurality of pillar portions 9b arranged at substantially equal intervals in the circumferential direction so as to connect the pair of annular portions 9a and 9a, and pocket portions 9c that are formed between the pillar portions 9b adjacent to each other in the circumferential direction and hold the cylindrical rollers 7 rollably.

### <Second Embodiment>

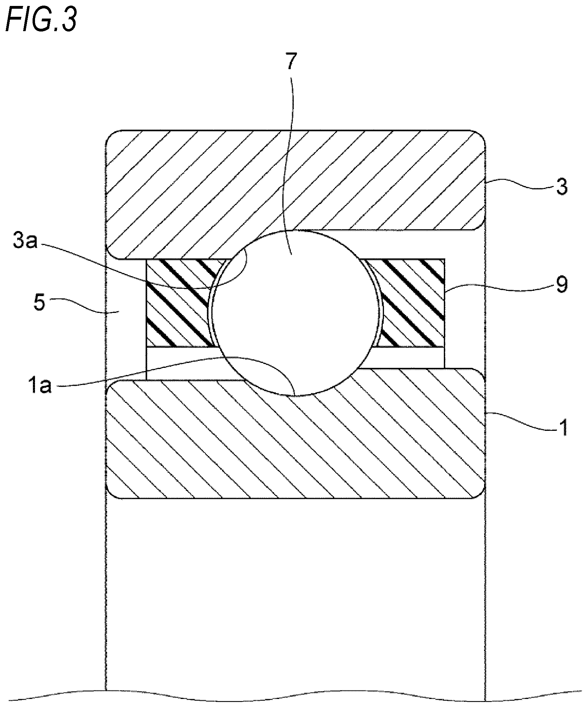

Further, an angular contact ball bearing (for example, "70BER20XDB" manufactured by NSK Ltd.; inner diameter 70 mm, outer diameter 110 mm, width 24 mm, contact angle 25°, two-row combination) illustrated in FIG. 3 can be illustrated as an embodiment.

The angular contact ball bearing is configured by including an inner ring 1 having an inner ring raceway surface 1a on an outer peripheral surface of the inner ring 1, an outer ring 3 having an outer ring raceway surface 3a on an inner peripheral surface of the outer ring 3, a plurality of balls (rolling elements) 7 that are rollably incorporated between the inner ring raceway surface 1a and the outer ring raceway surface 3a, and a synthetic resin retainer 9 that holds the plurality of balls 7 at substantially equal intervals in a circumferential direction.

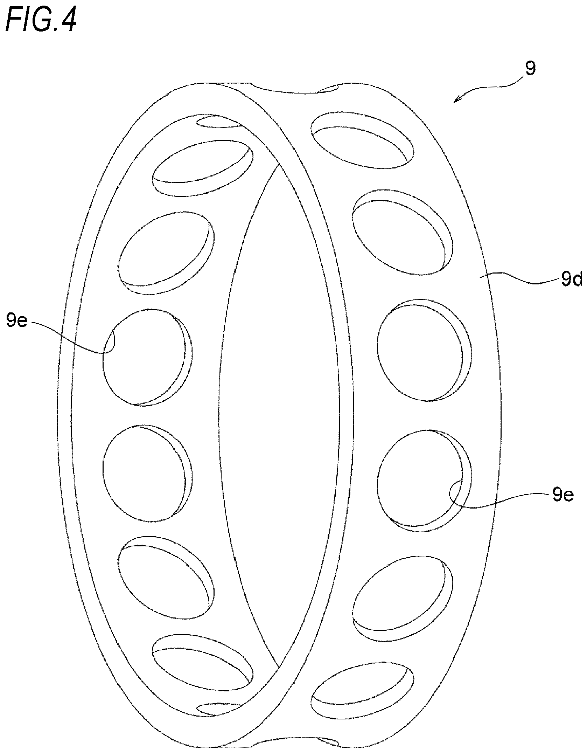

As illustrated in FIG. 4, the synthetic resin retainer 9 is composed of an annular member 9d having a plate shape and a plurality of pocket portions 9e that are formed at substantially equal intervals in the circumferential direction of the annular member 9d and hold the balls 7 rollably. The synthetic resin retainer 9 is produced by injection molding.

### <Third Embodiment>

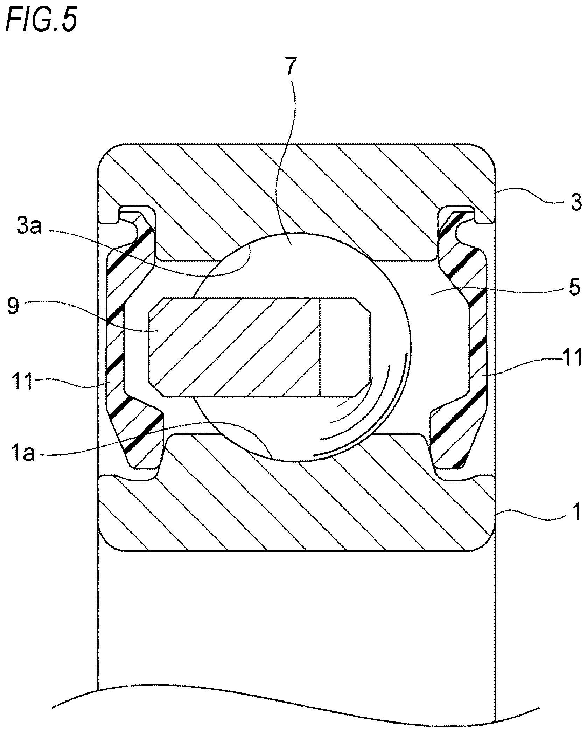

Moreover, a deep groove ball bearing illustrated in FIG. 5 can be illustrated as an embodiment.

The deep groove ball bearing is configured by including an inner ring 1 having an inner ring raceway surface 1a on an outer peripheral surface of the inner ring 1, an outer ring 3 having an outer ring raceway surface 3a on an inner peripheral surface of the outer ring 3, a plurality of balls (rolling elements) 7 that are rollably incorporated between the inner ring raceway surface 1a and the outer ring raceway surface 3a, and a synthetic resin retainer 9 that hold the plurality of balls 7 at substantially equal intervals in a circumferential direction. Reference numeral 11 in the drawing indicates a sealing seal.

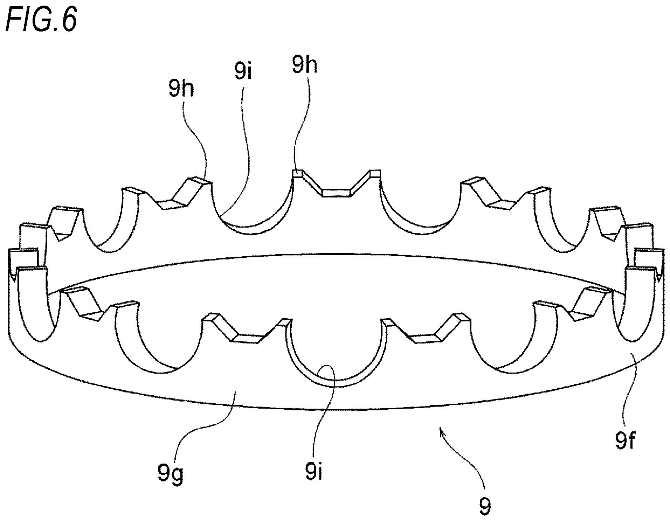

The synthetic resin retainer 9 is a crown-type retainer illustrated in FIG. 6. The synthetic resin retainer 9 is for a deep groove ball bearing with an outer diameter of 47 mm and an inner diameter of 17 mm, for example, and includes an annular portion 9f formed at one end portion in an axial direction, a plurality of pillar portions 9g protruding to one side in the axial direction from a plurality of locations spaced apart in a circumferential direction of the annular portion 9f, and a pair of claw portions 9h and 9h provided at a tip end portion of each pillar portion 9g. The synthetic resin retainer 9 is produced by injection molding. Facing surfaces of the claw portions 9h and 9h adjacent in the circumferential direction and an axial side surface of the annular portion 9f between these facing surfaces cooperate so that a pocket 9i is formed and the ball 7 is rotatably held. The balls 7 are pushed into the respective pockets 9i provided at predetermined equal intervals on the annular portion 9f from opening sides of the pair of claw portions 9h and 9h, and are fitted by elastically deforming the claw portions 9h and 9h.

### <Fourth Embodiment>

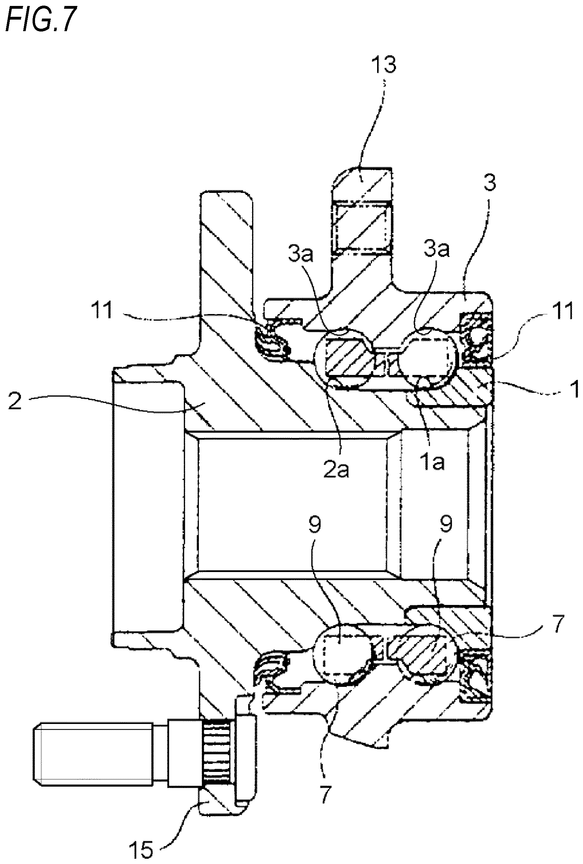

A wheel rolling bearing illustrated in FIG. 7 can be illustrated as an embodiment.

The present embodiment shows a wheel rolling bearing unit (wheel rolling bearing) for supporting a drive wheel supported by a suspension system by a mounting portion 13 formed on an outer peripheral surface of an outer ring 3, which is a fixed wheel.

In the present embodiment, rolling elements (balls) 7 are rollably held via a synthetic resin retainer 9 in a space defined by a rolling groove 2a formed in a hub 2, a rolling groove 1a of an inner ring 1, which is external-fittably supported with an outer end surface (the left end surface in the drawing) abutted against a step portion provided at an end portion of the hub 2, and rolling grooves 3a and 3a of the outer ring 3 that face the respective rolling grooves 2a and 1a. A spline groove is formed on an inner peripheral surface of the hub 2, and a mounting flange 15 is formed on an outer peripheral surface of an outer end portion (this refers to an end that is outside in a width direction when assembled to a vehicle, the end portion in FIG. 7). Reference numeral 11 indicates a sealing seal. When assembled to the vehicle, a drive shaft that is rotationally driven is inserted into the spline groove via a constant velocity joint, and a wheel is fixed to the mounting flange 15.

For the synthetic resin retainer 9, various synthetic resin retainers, such as a crown-type retainer and a cage-type retainer, which are incorporated in wheel rolling bearings, can be adopted, and the design can be appropriately changed within the scope of the present invention.

The wheel rolling bearing shown in the present embodiment is an example. For example, a wheel rolling bearing for supporting a driven wheel supported by an independent suspension is also subject to the present invention, and the wheel rolling bearing is not particularly limited.

### <Configuration of Synthetic Resin Retainer and Sealing Seal>

The configuration of the synthetic resin retainer 9, which is a feature of the fourth embodiment, will be described in detail below. In the present embodiment, a polyamide resin composition including polyamide 410 and a reinforcing material with a content of 0% by weight to 10% by weight is produced by injection molding. This is because, in this type of retainer, since claws of the retainer are thin, it is often possible to suppress cracking and whitening during ball assembly by reducing the reinforcing material. The same applies to the sealing seal 11 as well.

The polyamide 410 resin used as a base resin forming the synthetic resin retainer 9 in each of the above-described embodiments is originally a polycondensate of petroleum-derived tetramethylenediamine (1,4-diaminobutane, butanediamine) and sebacic acid derived from plant-derived castor oil, but tetramethylenediamine is also evolved into a plant-derived material made from wood chips.

Tetramethylenediamine and sebacic acid, two plant-derived raw materials, are reacted in a 1 : 1 ratio to synthesize polyamide 410, which has a bio content of 100% (initially 70%) and is an environmentally friendly material (carbon neutral).

Polyamide 410 has a water absorption rate (23°C, in water, two weeks) of 5.8%. Thus, polyamide 410 is suppressed to about 73%, compared to 8% of polyamide 66 (23°C, in water, two weeks), which is most commonly used for a rolling bearing retainer. Therefore, dimensional change due to water absorption is small, and reliability is high due to excellent dimensional stability.

A molecular weight of polyamide 410 is within a range that allows injection molding with a reinforcing material such as a glass fiber contained. Specifically, the molecular weight of polyamide 410 is in a range of 13,000 to 28,000 in terms of number average molecular weight, and more preferably in a range of 18,000 to 26,000 in terms of number average molecular weight in consideration of fatigue resistance and moldability. In a case where the number average molecular weight is less than 13,000, the molecular weight is extremely low, so the fatigue resistance is poor, and the practicality is low. On the other hand, in a case where the number average molecular weight exceeds 28,000, when a reinforcing material such as a glass fiber with a preferred content of 15% by weight to 35% by weight is included, melt viscosity becomes extremely high, thereby making it difficult to manufacture the retainer with high accuracy by injection molding, which is not preferable.

Polyamide 410 exhibits a certain level of durability even when used as a resin alone, works well against wear of mating members (rolling element and outer ring) with which the retainer may come into contact, and functions sufficiently as the retainer. However, when the retainer is used under severer conditions of use, it is assumed that the retainer will be damaged, deformed, or worn. Therefore, it is preferable to blend a reinforcing material in order to further increase reliability.

As the reinforcing material, a glass fiber, a carbon fiber, an aramid fiber, a potassium titanate whisker, an aluminum borate whisker, and the like are preferable, and considering the adhesiveness with the above-described polyamide resin, it is more preferable to treat a surface with a silane coupling agent or the like. Moreover, these reinforcing materials can be used in combination with multiple types.

Considering impact strength, it is preferable to blend a fibrous material such as a glass fiber or a carbon fiber, and furthermore, considering damage to a mating material, it is preferable to blend a whisker-like material in combination with the fibrous material. In the case of mixed use, the mixing ratio varies depending on the types of the fibrous material and the whisker-like material, and is appropriately selected in consideration of impact strength, damage to the mating material, and the like.

As the glass fiber, for example, in addition to those with a general average fiber diameter of 10 µm to 13 µm, those with an average fiber diameter of 5 µm to 7 µm that can increase strength and improve wear resistance with a small content, or those with an irregular cross section are more preferable.

As the carbon fiber, for example, when priority is given to strength, PAN-based ones are preferable, but pitch-based ones, which are advantageous in terms of cost, can be used. A preferable average fiber diameter is 5 µm to 15 µm. Since the carbon fiber itself has high strength and high elastic modulus, it is possible to increase the strength and elastic modulus of the retainer compared to a glass fiber.

As the aramid fiber, for example, a para-aramid fiber having excellent reinforcing properties can be preferably used. A preferable average fiber diameter is 5 µm to 15 µm. Unlike the glass fiber and carbon fiber, the aramid fiber does not damage a steel material, so a surface condition of a mating member with which the retainer comes into contact does not deteriorate. Therefore, the aramid fiber is more preferable when emphasizing acoustic characteristics of the bearing.

These reinforcing materials are preferably blended in a proportion of 10% by weight to 40% by weight, particularly 15% by weight to 30% by weight. When the content of the reinforcing material is less than 10% by weight, less improvement in mechanical strength is not preferable. When the content of the reinforcing material is more than 40% by weight, the moldability deteriorates, and depending on the type of the reinforcing material, the damage to the mating material is increased, which is not preferable.

Further, in order to prevent deterioration due to heat during molding and use, it is preferable to add an iodide-based heat stabilizer or an amine-based antioxidant to a resin as an additive, either singly or in combination.

The grease is mainly composed of a thickener and a base oil, and the base oil is mainly composed of a poly-α-olefin oil in consideration of wettability to polyamide 410, and the thickener includes a urea compound composed of an amine and an isocyanate, a Li soap, a Li complex soap, a Ba soap, a Ba complex soap, and the like.

Among these thickeners, a urea compound having a urea bond having a structure similar to that of polyamide is particularly preferred because of the excellent adsorptivity to the polyamide resin. The base oil may be a mixture of a diester oil or an aromatic ester oil in order to improve lubricating properties of the poly-α-olefin oil. A mixing amount is preferably 30% by weight or less with respect to the entire base oil.

Compared to polyamide 66, which is commonly used in the rolling bearing retainer, polyamide 410 has excellent wettability with the poly-α-olefin oil due to presence of C 10 (derived from sebacic acid) moieties having long hydrocarbon chains between amide groups.

In addition, other additives can be added to this grease. Examples thereof include amine-based and phenol-based antioxidants, rust preventives such as Ca sulfonate, extreme pressure additives such as MoDTC, montan acid ester waxes, montan acid ester partially saponified waxes, polyethylene waxes, oiliness improvers such as oleic acid, and the like.

By the way, in a rolling bearing, lubricant enters a gap between the retainer and the rolling element and moves toward an outer ring side due to centrifugal force. In this case, since the lubricant enters from an inner ring side end surface of the retainer, the larger a distance between the retainer and the inner ring, the easier it is for the lubricant to enter. In a retainer of an outer ring guide type, a gap with respect to an inner ring is large, so lubricant can easily enter and better lubrication is possible. Therefore, when the synthetic resin retainer 9 of each embodiment is of the outer ring guide type, a wear prevention effect becomes more remarkable.

Specifically, as shown in Table 1, a polyamide resin composition (resin pellet) can be prepared by blending the polyamide resin and the reinforcing material (glass fiber).

**Table 1**

| Retainer • Seal Configuration | |
|---|---|
| | Mixing example |
| Base resin | Polyamide 410 |
| Reinforcing material | GF treated with silane coupling agent (average fiber diameter 13 µm), 30 wt% |
| Melting point (°C) | 250 |
| Bio content (%) | 100 |

| | |
|---|---|
| • Example: DSM EcoPaXX Q-HG6 containing 30% by mass of GF (heat stabilizer-containing grade, average molecular weight unknown) | |

Using resin pellets shown in Table 1, the synthetic resin retainer 9 for the cylindrical roller bearing of the first embodiment, the synthetic resin retainer 9 for the angular contact ball bearing of the second embodiment, and the retainer 9 and sealing seal 11 for the deep groove ball bearing of the third embodiment can be produced by injection molding.

Evaluation tests can be performed as follows for dimensional stability, durability, and ease of assembly.

### <Evaluation Conditions for Dimensional Stability>

For example, dimensional stability can be evaluated by the following.

Retainers 9 forming the rolling bearings of the first to fourth embodiments are left under the following condition I or condition II, and after a predetermined time elapses, a change amount in an outer diameter of the retainer is measured.

Under any conditions, the change amount of 50 µm or less was evaluated as acceptable "∘", and the change amount exceeding 50 µm was evaluated as unacceptable "☓".
- Condition I: 60°C, 90% RH, 70 hours
- Condition II: 80°C, 90% RH, 70 hours

### <Evaluation>

Retainers 9 are left under the conditions I and II, and after a predetermined time elapses, outer dimensions of the retainers 9 are measured. It is considered that each retainer 9 can suppress the change amount in the outer diameter dimension to 50 µm or less.

### <Durability Evaluation Condition>

For example, durability can be evaluated by the following.

Each test body (cylindrical roller bearing of the first embodiment, angular contact ball bearing of the second embodiment, and deep groove ball bearing of the third embodiment using the retainer described above) is incorporated into an actual spindle unit, and a steering operation is performed repeatedly under the following conditions I to III. Under any conditions, when the bearing could be operated continuously for 1,000 hours, it was evaluated to be acceptable "∘", and when the bearing could not be operated continuously for 1,000 hours, it was evaluated to be unacceptable "☓".

The lubricating grease that fills an internal space preferably has the following composition so as not to deteriorate during the above 1,000 hours of operation.

Using a poly-α-olefin oil (5.7 mm²/s at 100°C) as a base oil, it is preferable to use the grease with penetration grade No. 2 in which an aliphatic diurea compound is used as a thickener (amount of thickener: 13% by weight), and various additives are blended. As the additive, those containing normal amounts of extreme pressure additives, antioxidants, and rust preventives are preferred. In addition, a precompression load when incorporating the test bearing is 1,500 N, a test rotation speed is 10,000 min⁻¹, and a grease filling amount is preferably 7% of a bearing space volume, which is smaller than usual, in order to see a difference depending on a resin material.
- Condition I: 30°C, 50% RH
- Condition II: 50°C, 90% RH
- Condition III: 80°C, 50% RH

### <Evaluation>

For each bearing, under any of the condition I, condition II, and condition III, evaluation can be made by continuous operation of the bearing for 1,000 hours.

### incorporation Performance Evaluation Conditions>

For example, assemblability (incorporation performance) can be evaluated by the following.

Regarding the crown-type retainer 9 that forms the deep groove ball bearing of the third embodiment illustrated in FIG. 6, an incorporation test is performed using an automatic incorporation tester, and after the test, the incorporation performance can be evaluated based on whitening, cracking, deformation, and the like of the claw portion 9h of the retainer 9. The test is performed with n = 10 for each composition, and when even one abnormality (whitening, cracking, deformation, or the like of the claw portion 9h) was found, it was evaluated to be unacceptable "☓", and when there was no abnormality, it was evaluated to be acceptable "∘".

### <Evaluation>

In each crown-type retainer 9 used in the test, it is considered that none of symptoms such as whitening, cracking, deformation, and the like of the claw portion 9h are confirmed.

### <Heat Resistance Comparative Evaluation Conditions>

For the PA410GG25 material (DSM EcoPaXX Q-HG6, heat stable grade) and the PA66GF25 material (BASF Ultramid A3HG5, heat stable grade), the heat resistance was evaluated in an environment at 120°C using a tensile test piece molded by injection molding. The tensile strength retention (initial value is 100) and strain retention (initial value is 100) after 1,000 hours are shown in Table 2 below.

**Table 2**

| Heat Resistance Evaluation Result (120°C, after 1,000 hours) | | |
|---|---|---|
| | Example (PA410GG25) | Comparative Example (PA66GF25) |
| Tensile strength retention | 100.5 | 102.5 |
| Strain retention | 99.7 | 101.6 |

As is clear from Table 2, at 120°C, which is assumed to be a normal use environment for the rolling bearing, the tensile strength and strain hardly change even after 1,000 hours, and a degree of change is the same as that of PA66. Therefore, it was confirmed that PA410 can be used as an alternative to PA66.

Also, regarding a resin composition that does not contain the reinforcing material, using the tensile test piece molded by injection molding, the heat resistance was evaluated in the same manner as above in an environment at 120°C and evaluation results are shown in Table 3. Further, results of evaluating the influence of grease are shown in Table 4. For evaluation of the influence of grease, the tensile test piece was immersed in grease and held at 120°C for 1,000 hours. The initial value is shown as 100. Also, PA410 non-reinforced material (DSM EcoPaXX Q150D, heat stabilizer-containing grade) and PA66 non-reinforced material (BASF Ultramid A4H, heat stabilizer-containing grade) were used. The grease used for immersion is a grease composition including an ester oil and a lithium soap thickener.

**Table 3**

| Heat Resistance Evaluation Result (120°C, after 1,000 hours) | | |
|---|---|---|
| | Example (PA410) | Comparative Example (PA66) |
| Tensile strength retention | 96.6 | 101.8 |
| Strain retention | 105.1 | 102.0 |

**Table 4**

| Grease Immersion Evaluation Result (120°C, after 1,000 hours) | | |
|---|---|---|
| | Example (PA410) | Comparative Example (PA66) |
| Tensile strength retention | 101.8 | 103.2 |
| Strain retention | 98.2 | 118.2 |

As is clear from Tables 3 and 4, at 120°C, which is assumed to be a normal use environment for a wheel bearing unit, the tensile strength and strain hardly change, and a degree of change is the same as that of PA66. Therefore, it was confirmed that PA410 can be used as an alternative to PA66.

### INDUSTRIAL APPLICABILITY

The present invention is also applicable to other rolling bearings and other synthetic resin retainers.

### REFERENCE SIGNS LIST

1: inner ring
3: outer ring
5: annular gap
7: rolling element
9: retainer
11: sealing device

## Claims

1. A rolling bearing that includes at least an inner ring, an outer ring, a synthetic resin retainer, and a rolling element, wherein
the synthetic resin retainer is formed of a polyamide resin composition including polyamide 410 and a reinforcing material with a content of 0% by weight to 40% by weight.

2. The rolling bearing according to claim 1, wherein
the reinforcing material is 10% by weight to 40% by weight.

3. The rolling bearing according to claim 1 or 2, wherein
the polyamide 410 has a bio content of 100%.

4. The rolling bearing according to any one of claims 1 to 3, wherein
the rolling bearing is an outer ring guide type.

5. The rolling bearing according to any one of claims 1 to 4, wherein
the retainer is a crown-type retainer having a claw portion.

6. The rolling bearing according to any one of claims 1 to 5, wherein:
an internal space of the rolling bearing is filled with grease; and
a main component of a base oil of the grease is a poly-α-olefin oil.

7. The rolling bearing according to any one of claims 1 to 5, wherein:
an internal space of the rolling bearing is filled with grease; and
the grease is biodegradable grease.

8. The rolling bearing according to any one of claims 1 to 7, wherein:
a sealing seal is provided on an end surface of the rolling bearing; and
the sealing seal is formed of a polyamide resin composition including polyamide 410 and a reinforcing material with a content of 0% by weight to 40% by weight.

9. The rolling bearing according to claim 8, wherein
the reinforcing material forming the polyamide resin composition has a content of 10% by weight to 40% by weight.

10. The rolling bearing according to claim 8 or 9, wherein
the polyamide 410 forming the sealing seal has a bio content of 100%.
